# EUROPÄISCHE PATENTSCHRIFT

(11) **EP 3 437 151 B1**
(45) Veröffentlichungstag und Bekanntmachung des Hinweises auf die Patenterteilung: **18.09.2019**
(21) Anmeldenummer: 17714691.7
(22) Anmeldetag: 28.03.2017
(51) Int. Cl.: H01M 8/24, H01M 8/04007, H01M 8/04089, H01M 8/043

(54) **VERFAHREN ZUM AUSTAUSCH EINES BRENNSTOFFZELLENSTAPELS IN EINEM BRENNSTOFFZELLENSYSTEM**
METHOD FOR REPLACING A FUEL CELL STACK IN A FUEL CELL SYSTEM
PROCÉDÉ D'ÉCHANGE D'UN EMPILEMENT DE PILES À COMBUSTIBLES DANS UN SYSTÈME DE PILES À COMBUSTIBLE

(30) Priorität: 31.03.2016 EP 16163367
(43) Veröffentlichungstag der Anmeldung: 06.02.2019
(73) Patentinhaber: Siemens Aktiengesellschaft, 80333 München (DE)
(72) Erfinder: BRANDT, Torsten, 91301 Forchheim (DE); BRAUNECKER, Michael, 90491 Nürnberg (DE); HOFFMANN, Joachim, 90559 Burgthann (DE); LOCHNER, Torsten, 91315 Höchstadt (DE); MATTEJAT, Arno, 91056 Erlangen (DE); STÜHLER, Walter, 96114 Hirschaid (DE)
(86) Internationale Anmeldenummer: PCT/EP2017/057314
(87) Internationale Veröffentlichungsnummer: WO 2017/167752

(56) Entgegenhaltungen:
- DE-A1- 4 308 200
- US-A1- 2012 276 469

## Beschreibung

Die Erfindung betrifft ein Verfahren zum Austausch eines Brennstoffzellenstapels in einem Brennstoffzellensystem.

Aus der DE102008015350A1 ist ein aus Brennstoffzellenstapeln bestehendes Brennstoffzellensystem bekannt. Die Brennstoffzellenstapel sind modular aufgebaut und bestehen aus einzelnen Brennstoffzellen oder Gruppen von Brennstoffzellen. Die einzelnen Brennstoffzellen oder Gruppen von Brennstoffzellen sind in einem oder mehreren Baugruppenträgern gehalten, die an wenigstens einer Seite Versorgungsleitungen zur Zu- und Abführung von Betriebsmedien (z. B. Wasserstoff, Sauerstoff und ein Kühlmedium) des Brennstoffzellensystems aufweisen. Die einzelnen Versorgungsleitungen weisen geeignete Absperrvorrichtungen wie selbstsperrende Schnellkupplungen, Absperrhähne oder Ventile auf, so dass die Zu- bzw. Abfuhr der Betriebsmedien unterbrochen werden kann. Dadurch ist es möglich, einzelne Brennstoffzellen oder Brennstoffzellengruppen ein- und auszubauen, ohne den gesamten Brennstoffzellenstapel demontieren zu müssen. Auch ist der Betrieb mit einigen defekten Brennstoffzellen möglich, indem bei der defekten Brennstoffzelle einfach die Versorgung mit den Betriebsmedien unterbrochen und die Zelle elektrisch überbrückt wird. Weiterhin müssen in den Baugruppenträgern nicht alle Aufnahmeplätze für die einzelnen Brennstoffzellen oder Brennstoffzellengruppen besetzt sein, so dass auch ein Betrieb mit weniger als der maximal möglichen Anzahl von Brennstoffzellen möglich ist.

Wie der Austausch einzelner Brennstoffzellen oder Brennstoffzellengruppen im Einzelnen erfolgt, ist der DE102008015350A1 nicht zu entnehmen. Auch DE 43 08 200 A1 und US 2012/276469 A1 beschreiben Brennstoffzellensysteme in denen Brennstoffzellenstapel entfernt bzw. ersetzt werden können.

Beim Betrieb eines Brennstoffzellensystems ist es wünschenswert, dass ein Brennstoffzellenstapel, der nicht mehr funktionsfähig ist, ohne Abschaltung des Brennstoffzellensystems durch ein möglichst einfaches und schnelles Verfahren ausgetauscht und in Betrieb genommen werden kann. Hierbei ist es notwendig, dass die Betriebsmedien in den Betriebsmedienräumen des neu eingebauten Brennstoffzellenstapels in eine Zusammensetzung gebracht werden, welche den Betrieb des Brennstoffzellensystems nicht gefährdet, d. h.: kein Wasserstoff und nur wenig inerte Gase im Sauerstoffmedienraum, kein Sauerstoff und ebenfalls nur wenig inerte Gase im Wasserstoffmedienraum und entlüftetes bzw. entgastes Kühlwasser im Kühlwasserraum. Bisher wurde zunächst das komplette Brennstoffzellensystem abgeschaltet, bevor der oder die betroffenen Brennstoffzellenstapel ausgetauscht und schließlich das komplette Brennstoffzellensystem wieder eingeschaltet wurde.

Gemäß der Erfindung wird die Aufgabe durch das in Anspruch 1 angegebene Verfahren gelöst, von dem vorteilhafte Weiterbildungen in den Unteransprüchen angegeben sind.

Vor dem Ausbau des Brennstoffzellenstapels wird dieser lastseitig bzw. steuerungsseitig getrennt. Anschließend werden die entsprechenden Medien- und Prozess-Anschlüsse getrennt und der Stapel entfernt. Die Betriebsmedienräume des ausgebauten Stapels können anschließend in einer Hilfsvorrichtung in einen gewünschten Zustand gebracht werden, in dem die Gasräume möglichst keine Reaktanten mehr enthalten, sondern mit inerten Gasen befüllt sind, und der Kühlwasserraum geleert ist. Dabei werden die übrigen Brennstoffzellenstapel in dem Brennstoffzellensystem weiter betrieben, es sei denn, dass diese teilweise auch lastseitig getrennt werden müssen. In diesem Fall werden diese vorzugsweise im Leerlauf betrieben.

Der neue Brennstoffzellenstapel wird z. B. in der Hilfsvorrichtung für den Einbau vorbereitet. Ausgehend von einem gewünschten Lagerungszustand mit Wasserstoffüberschuss, liegt sowohl kathoden- als auch anodenseitig Wasserstoff vor, so dass insbesondere die Kathodenseite, also der Sauerstoffmedienraum, evakuiert werden sollte. Vorzugsweise werden jedoch beide Medienräume Wasserstoff und Sauerstoff evakuiert, damit beim späteren Einbau keine Fremdgase in das Brennstoffzellensystem gelangen. Der Vakuumdruck sollte unter dem Wasserdampfdruck, also kleiner 200 mbar, liegen. Außerdem wird der Kühlwasserraum ausreichend entweder mit Kühlwasser aus dem Brennstoffzellensystem, der Kühlwassereinspeisung oder dem ausgebauten Brennstoffzellenstapel aufgefüllt. Anschließend kann der neue Brennstoffzellenstapel in das Brennstoffzellensystem eingebaut und mit den entsprechenden Medien-, Strom- und Prozess-Anschlüssen verbunden werden. Alternativ kann der neue Brennstoffzellenstapel zuerst eingebaut und dann bei abgesperrter Zu- und Abfuhr der Betriebsmedien aus bzw. zu dem Brennstoffzellensystem für die Verbindung mit den Betriebsmedien in dem System vorbereitet werden. Wenn der Druck in den Medienräumen Wasserstoff und Sauerstoff unterhalb eines festgelegten Druckniveaus, also mindestens unter dem jeweiligen Solldruck für das betreffende Medium, liegt, kann die Inbetriebnahme, beginnend mit einem Druckhaltetest/Dichtigkeitstest und/oder elektrochemischen Lecktest durchgeführt werden. Um die für den Druckhaltetest/Dichtigkeitstest erforderliche Druckdifferenz zwischen den Medienräumen zu erhalten, kann zunächst nur einer der beiden Medienräume mit dem jeweiligen Reaktanten (teil)aufgefüllt werden; nach Abschluss des Tests wird auch der andere Medienraum befüllt.

In dem Brennstoffzellensystem können ein oder mehrere Brennstoffzellenstapel während des Betriebs ausgetauscht werden. Dabei wird die Funktion anderer Brennstoffzellenstapel in dem System nicht beeinflusst oder gefährdet. Ebenso muss nicht das gesamte Brennstoffzellensystem ausgeschalten werden, weil die Überführung des eingebauten Brennstoffzellenstapels in einen betriebsbereiten Zustand durch eine zusätzliche Einrichtung oder bei unterbrochener Betriebsmedienverbindung zu dem System erfolgt.

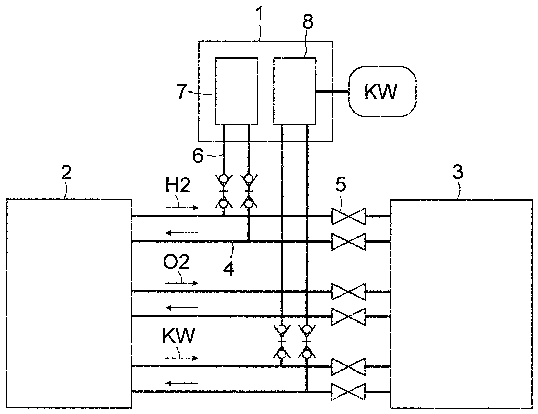

Die einzige Figur der Zeichnung zeigt in sehr schematischer Darstellung beispielhaft eine Vorrichtung 1 zur Vorbereitung eines Brennstoffzellenstapels 2 zum Einbau in ein Brennstoffzellensystem 3. Der Brennstoffzellenstapel 1 ist über Betriebsmittelleitungen 4 mit dem Brennstoffzellensystem 3 verbunden, wobei geeignete Absperrvorrichtungen, hier in Form von steuerbaren Ventilen 5, eine Unterbrechung der Zu- bzw. Abfuhr der Betriebsmedien Wasserstoff H2, Sauerstoff O2 und Kühlwasser KW ermöglichen. Die Vorrichtung 1 verfügt über Anschlüsse 6 zur Herstellung einer Verbindung zu den Betriebsmedienräumen des Brennstoffzellenstapels 2, eine Unterdruck-Einrichtung 7 zum Evakuieren des Sauerstoffmedienraums und/oder Wasserstoffmedienraums sowie eine Einrichtung 8 zum Entlüften und anschließenden Füllen des Kühlmedienraums mit dem Kühlwasser KW.

## Patentansprüche

1. Verfahren zum Austausch eines Brennstoffzellenstapels in einem mit Wasserstoff (H2) und Sauerstoff (O2) betriebenen und mit einem Kühlmedium (KW) versorgten Brennstoffzellensystem (3) bei laufendem Betrieb, wobei nach Entfernung des auszutauschenden Brennstoffzellenstapels aus dem Brennstoffzellensystem (3) ein neuer Brennstoffzellenstapel (2) mit evakuiertem Sauerstoffmedienraum in das Brennstoffzellensystem (3) eingefügt und aus diesem mit Sauerstoff (O2) aufgefüllt wird.

2. Verfahren nach Anspruch 1, **dadurch gekennzeichnet, dass** der neue Brennstoffzellenstapel (2) mit ebenfalls evakuiertem Wasserstoffmedienraum in das Brennstoffzellensystem (3) eingefügt und aus diesem mit Wasserstoff aufgefüllt wird.

3. Verfahren nach Anspruch 1 oder 2, **dadurch gekennzeichnet, dass** der neue Brennstoffzellenstapel (2) vor Einfügen in das Brennstoffzellensystem (3) mit dem Kühlmedium (KW) aufgefüllt wird.

4. Verfahren nach Anspruch 3, **dadurch gekennzeichnet, dass** der neue Brennstoffzellenstapel (2) mit dem Kühlmedium (KW) des aus dem Brennstoffzellensystem (3) entfernten Brennstoffzellenstapels aufgefüllt wird.

5. Verfahren nach Anspruch 1 oder 2, **dadurch gekennzeichnet, dass** der neue Brennstoffzellenstapel (2) nach Einfügen in das Brennstoffzellensystem (3) aus diesem mit Kühlmedium (KW) aufgefüllt wird.

6. Verfahren nach einem der vorangehenden Ansprüche, **dadurch gekennzeichnet, dass** ein Druckhaltetest/Dichtigkeitstest bei unterschiedlichem Befüllungsgrad des Sauerstoffmedienraums und Wasserstoffmedienraums durchgeführt wird.

7. Verfahren nach einem der vorangehenden Ansprüche, **dadurch gekennzeichnet, dass** der neue Brennstoffzellenstapel (2) elektrisch mit dem Brennstoffzellensystem (3) verbunden wird, wenn bei dem Auffüllen mit dem Sauerstoff (O2) oder dem Sauerstoff (O2) und dem Wasserstoff (H2) ein Mindestdruck erreicht wird.

8. Vorrichtung (1) zur Durchführung des Verfahrens nach einem der vorangehenden Ansprüche, mit Anschlüssen (6) zur Herstellung einer Verbindung zu den Betriebsmedienräumen des Brennstoffzellenstapels (2) und einer Unterdruck-Einrichtung (7) zum Evakuieren des Sauerstoffmedienraums und/oder Wasserstoffmedienraums.

9. Vorrichtung (1) nach Anspruch 8 mit einer Einrichtung (8) zum Füllen des Kühlmedienraums mit dem Kühlmedium (KW).

## Claims

1. Method for exchanging a fuel cell stack in a fuel cell system (3) operated with hydrogen (H2) and oxygen (O2) and supplied with a cooling medium (KW) during operation, wherein after the fuel cell stack to be exchanged has been removed from the fuel cell system (3), a new fuel cell stack (2) with evacuated oxygen media region is inserted into the fuel cell system (3) and filled with oxygen (O2) therefrom.

2. Method according to claim 1, **characterised in that** the new fuel cell stack (2) with likewise evacuated hydrogen media region is inserted into the fuel cell system (3) and filled with hydrogen therefrom.

3. Method according to claim 1 or 2, **characterised in that** the new fuel cell stack (2) is filled with the cooling medium (KW) before being inserted into the fuel cell system (3).

4. Method according to claim 3, **characterised in that** the new fuel cell stack (2) is filled with the cooling medium (KW) of the fuel cell stack removed from the fuel cell system (3).

5. Method according to claim 1 or 2, **characterised in that** the new fuel cell stack (2), after being inserted into the fuel cell system (3), is filled with cooling medium (KW) therefrom.

6. Method according to one of the preceding claims, **characterised in that** a pressure holding test/leak test is carried out at a differing filling degree of the oxygen media region and hydrogen media region.

7. Method according to one of the preceding claims, **characterised in that** the new fuel cell stack (2) is electrically connected to the fuel cell system (3), if a minimum pressure is reached when filling up with the oxygen (O2) or the oxygen (O2) and hydrogen (H2).

8. Apparatus (1) for carrying out the method according to one of the preceding claims, with terminals (6) for establishing a connection with the operating media regions of the fuel cell stack (2) and a vacuum device (7) for evacuating the oxygen media region and/or hydrogen media region.

9. Apparatus according to claim 8, with a device (8) for filling the cooling media region with the cooling medium (KW).

## Revendications

1. Procédé de remplacement d'un empilement de piles à combustible dans un système (3) de piles à combustible fonctionnant à l'hydrogène (H2) et à l'oxygène (O2) et alimenté en un fluide (KW) de refroidissement, dans lequel après le retrait de l'empilement de piles à combustible à remplacer du système (3) de piles à combustible, on insert dans le système (3) de piles à combustible un nouvel empilement de piles à combustible ayant un espace mis sous vide de fluide à oxygène et on le remplit d'oxygène (O2) à partir de celui-ci.

2. Procédé suivant la revendication 1, **caractérisé en ce qu'**on insert dans le système (3) de piles à combustible le nouvel empilement (2) de piles à combustible ayant également un espace de fluide d'hydrogène mis sous vide et on le remplit d'hydrogène à partir de celui-ci.

3. Procédé suivant la revendication 1 ou 2, **caractérisé en ce que** l'on remplit le nouvel empilement (2) de piles à combustible de fluide (KW) de refroidissement avant de l'insérer dans le système (3) de piles à combustible.

4. Procédé suivant la revendication 3, **caractérisé en ce que** l'on remplit le nouvel empilement (2) de piles à combustible du fluide (KW) de refroidissement de l'empilement de piles à combustible retiré du système (3) de piles à combustible.

5. Procédé suivant la revendication 1 ou 2, **caractérisé en ce que** l'on remplit le nouvel empilement (2) de piles à combustible, après insertion dans le système (3) de piles à combustible, de fluide (KW) de refroidissement à partir de celui-ci.

6. Procédé suivant l'une des revendications précédentes, **caractérisé en ce que** l'on effectue un test de maintien de la pression/un test d'étanchéité à un degré de remplissage différent de l'espace de fluide à oxygène et de l'espace de fluide à hydrogène.

7. Procédé suivant l'une des revendications précédentes, **caractérisé en ce que** l'on relie électriquement le nouvel empilement (2) de piles à combustible au système (3) de piles à combustible, si, lors du remplissage par de l'oxygène (O2) ou par de l'oxygène (O2) et de l'hydrogène (H2), une pression minimum est atteinte.

8. Installation (1) pour effectuer le procédé suivant l'une des revendications précédentes, comprenant des raccords (6) pour ménager une liaison aux espaces de fluide de fonctionnement de l'empilement (2) de piles à combustible et un dispositif (7) de mise en dépression pour faire le vide dans l'espace de fluide d'oxygène et/ou l'espace de fluide d'hydrogène.

9. Installation (1) suivant la revendication 8, comprenant un dispositif (8) pour remplir l'espace de fluide de refroidissement du fluide (KW) de refroidissement.
